# EUROPEAN PATENT APPLICATION

(11) **EP 1 977 853 A1**
(43) Date of publication of application: **08.10.2008**
(21) Application number: 08006809.1
(22) Date of filing: 03.04.2008
(51) Int. Cl.: B23Q 1/70, B23Q 17/22, F16C 39/00, H02K 7/09

(54) **Magnetic bearing spindle device for machine tool**

(30) Priority: 04.04.2007 JP 2007098648
(71) Applicant: JTEKT Corporation, Osaka-shi Osaka 542-8502 (JP)
(72) Inventor: Kubo, Atsushi, Osaka-shi Osaka 542-8502 (JP)
(74) Representative: Hager, Thomas Johannes

(57) **Abstract**

The control device displaces the main shaft in the axial direction and in the radial direction within the range of the gapbetween the ribmember of the main shaft and the axial magnetic bearing and the gap between the main shaft and the radial magnetic bearings, by controlling the attraction forces of the axial electromagnets and the radial electromagnets, whereby the main shaft can be positioned. By controlling the axial magnetic bearing and the radial magnetic bearings, it becomes possible to freely displace only the main shaft in the axial direction and in the radial direction, and therefore, the main shaft can be positioned at high speed and with high precision. Moreover, there is no necessity of providing the feeding mechanism in which the ball screw mechanism and linear motor etc. are employed for the purpose of displacing the magnetic bearing spindle device, and hence, reduction of the production cost for the grinding apparatus can be achieved.

## Description

### BACKGROUND OF THE INVENTION

The present invention relates to a magnetic bearing spindle device for a machine tool.

Conventionally, in a machine tool such as a grinding apparatus, a cutting apparatus, a machining center, etc., use of a magnetic bearing spindle device which supports a main shaft (a spindle) by means of a magnetic bearing in a non-contact manner, for the purpose of rotating the main shaft at high speed, has increased more and more. As the magnetic bearing spindle device for this purpose, a magnetic bearing spindle device in which the main shaft is supported in a non-contact manner by means of a set of axial magnetic bearing and two sets of radial magnetic bearings, as disclosed in JP-A-10-29101, for example, has been generally used.

In order to conduct complicated machine working, it is necessary to displace the magnetic bearing spindle device itself to which a work or a working tool is attached, and therefore, the magnetic bearing spindle device is so provided as to be displaced by a feeding mechanism. As the feeding mechanism, a ball screw mechanism which includes a ball screw arranged along a moving direction of a moving body such as a table, and a ball nut to be screwed with the ball screw and fixed to the moving body, as disclosed in JP-A-09-76139, for example, has been employed in many cases. By rotating the ball screw through drive of a motor which is operatively coupled to the ball screw, the moving body moves rectilinearly along the ball screw by means of the ball nut.

Moreover, as disclosed in JP-A-2004-283974, for example, in order to realize rapid rectilinear movement of the aforesaid moving body, a structure employing a linear motor as a drive source has been heretofore proposed, as the feeding mechanism. The linear motor includes a coil provided on a moving body such as a table which is supported by a pair of guide rails provided on a base so as to reciprocate, and a magnet provided on the base. Bypassing electric current through the coil on the moving body, the coil becomes an electromagnet, and then, the moving body moves rectilinearly, utilizing a attraction force and a repulsive force between the electromagnet and the magnet on the base.

Recently, requests for enhanced productivity and minute working have been more and more increased. In order to cope with such requests, it is necessary to position the main shaft at high speed and with high precision. In the machine tool in which the ball screw mechanism in JP-A-09-76139. is employed, it is considered, for example, to increase rotation number of the motor, for the purpose of attaining rapid feeding speed and accurate positioning of the magneticbearing spindle device. However, because problems such as occurrence of vibration and noise, rise of temperature, increase of thermal expansion, etc. are concerned, there is a limit in coping with the requests by increasing the rotation number of the motor.

By the way, the feeding speed of the ball screw is determined by the product of lead (screw pitch) and the rotation number. Therefore, it is considered to increase the feeding speed by making the lead larger, without increasing the rotation number of the motor. However, in this case, as the lead of the ball screw becomes larger, torsional load on the ball screw increases, and it is concerned that torsional vibration and positioning error may occur accordingly. In case where the ball screw mechanism is employed as the feeding mechanism in this manner, there has been a limit in positioning the magnetic bearing spindle device at high speed and with high precision.

On the other hand, the feeding mechanism employing the linear motor in JP-A-2004-283974, as the drive source, can easily position the magnetic bearing spindle device at high speed and with high precision, as compared with the aforesaid ball screw mechanism. However, the feeding mechanism employing the linear motor as the drive source tends to become large-sized and expensive in principle, as the feeding speed and positioning precision are enhanced. In the machine tool, in addition to the request for the high feeding speed and positioning precision, as described above, the request for low production cost has become more and more keen. Therefore, there is a problem that it is difficult to take a balance between performances of the magnetic bearing spindle device such as the feeding speed and the positioning precision which have been required and the production cost.

### SUMMARY OF THE INVENTION

The invention has been made in order to solve the above described problems, and it is an object of the invention to provide a magnetic bearing spindle device for a machine tool which can perform positioning of a main shaft at high speed and with high precision while production cost is depressed.

According to the invention, there is provided A magnetic bearing spindle device for a machine tool comprising:
a main shaft to be rotated by a motor.;
a rotating member provided on an outer peripheral surface of the main shaft;
a radial magnetic bearing including a plurality of radial electromagnets which are arranged so as to be opposed to the outer peripheral surface of the main shaft with predetermined radial gaps therebetween, the radial magnetic bearing magnetically floating the main shaft in a radial direction with attraction forces of the radial electromagnets to support the main shaft in a non-contact manner;
an axial magnetic bearing including at least one axial electromagnet which is arranged so as to be opposed to the rotating member in an axial direction with a predetermined axial gap therebetween, the axial magnetic bearing magnetically floating the main shaft in the axial direction with an attraction force of the axial electromagnet to support the main shaft in a non-contact manner;
a displacement detector that detects a position of the main shaft in the radial direction and in the axial direction and outputs a result of the detection as information of displacement of the main shaft; and
a control device that controls the attraction forces of the radial electromagnets and the axial electromagnet to maintain the main shaft at an optimum floating position and at a displaced position in which the main shaft is displaced in the radial direction within a range of the radial gap and/or in the axial direction within a range of the axial gap on the basis of the information of displacement of the main shaft obtained by the displacement detector.

According to the invention, it is possible to freely displace only the main shaft in the radial direction and in the axial direction, by controlling the radial magnetic bearings and the axial magnetic bearing within a range of the radial gap which is a gap between the radial electromagnet and the main shaft and within a range of the axial gap which is a gap between the axial electromagnet and the main shaft. As the results, positioning of the main shaft at high speed and with high precision can be achieved. Moreover, because the main shaft itself can be freely displaced, there is no necessity of providing the feeding mechanism in which the ball screw mechanism and the linear motor etc. are employed, for the purpose of displacing the magnetic bearing spindle device. Accordingly, reduction of the production cost for the machine tool can be achieved.

According to the present invention, the control device controls the attraction forces of the radial electromagnets to displace the main shaft in a range of a half of the radial gap, and controls the attraction force of the axial electromagnet thereby to displace the main shaft in a range of a half of the axial gap.

Conventionally, there has been a magnetic bearing spindle device for a machine tool which is so constructed that a warning is issued, when the axial gap and the radial gap which are gaps between the main shaft and the magnetic bearings become less than a half of the ordinary state. The invention can be particularly advantageously applied to such device. This is because the aforesaid warning will not be issued, since the main shaft is displaced within the range of each half of the axial gap and the radial gap which are usually secured with respect to the magnetic bearings. Moreover, contact between the main shaft and the magnetic bearings can be favorably restrained.

According to the invention, the control device performs positioning control of the main shaft according to a determined working controlling program.

According to the invention, the main shaft is controlled to be positioned according to the working controlling program which has been determined, whereby working can be favorably conducted.

According to the invention, positioning of the main shaft can be performed at high speed and with high precision while the production cost is depressed.

[0060]

### BRIEF DESCRIPTION OF THE DRAWINGS

Fig. 1 is a longitudinal sectional view of an essential part of a grinding apparatus in an embodiment according to the invention.
Fig. 2 is a cross sectional view of the essential part of the grinding apparatus taken along a line 1-1 in Fig. 1.
Fig. 3 is a block diagram showing an electrical structure of the grinding apparatus.
Fig. 4 is a longitudinal sectional view of the essential part of the grinding apparatus showing positional relation between a rib member of a main shaft and axial electromagnets.
Fig. 5 is a cross sectional view of the essential part of the grinding apparatus showing positional relation between the main shaft and a radial electromagnet.
Fig. 6 is a longitudinal sectional view schematically showing a structure of a magnetic bearing spindle device in another embodiment.

### DETAILED DESCRIPTION OF PREFERRED EMBODIMENTS

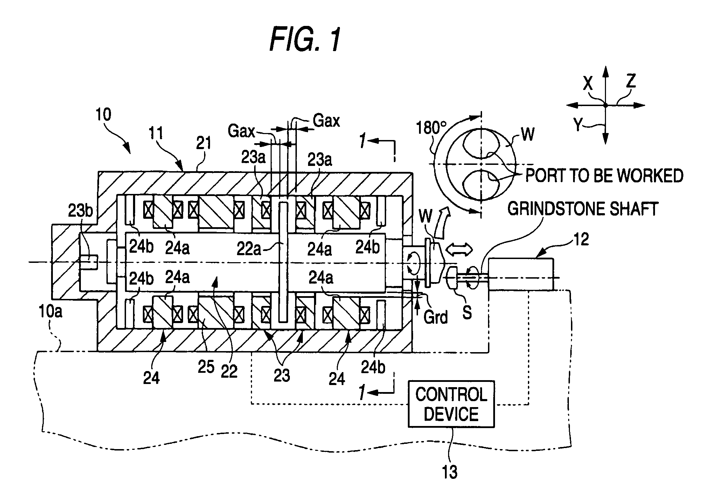

Now, referring to Figs. 1 to 3, the invention will be described by way of an embodiment which is applied to a magnetic bearing spindle device to be mounted on a grinding apparatus as a machine tool. In this embodiment, the grinding apparatus conducts rough grinding of a non-spherical lens.

As shown in Fig. 1, a magnetic bearing spindle device 11 which supports a work W so as to rotate, and a grindstone shaft spindle device 12 which supports a grindstone S, as a working tool, in a rotated state are disposed on an upper surface of a chassis 10a of a grinding apparatus 10. The grinding apparatus 10 is further provided with a control device 13 for controlling the magnetic bearing spindle device 11 and the grindstone shaft spindle device 12. The work W supported by the magnetic bearing spindle device 11 is rotated by 180 degree at a determined time interval, and pressed against the grindstone S which is held by the grindstone shaft spindle device 12 in a rotated state. In this manner, two parts at upper and lower positions on a surface of the work W will be ground.

### <Magnetic bearing spindle device>

As shown in Fig. 1, a main shaft (spindle) 22 is provided inside a casing 21 of the magnetic bearing spindle device 11 horizontally with respect to the upper surface of the chassis 10a. A rib member 22a in a shape of an annular plate is fitted over an outer peripheral surface of the main shaft 22 to be fixed thereto. The work W is attached to an outer end portion (a right end side in Fig. 1) of the main shaft 22.

A set of axial magnetic bearing 23 which supports the main shaft 22 in an axial direction (in a direction of an axis) in a non-contact manner, and two sets of right and left radial magnetic bearings 24, 24 which support the main shaft 22 in a radial direction (in a direction of a radius) in a non-contact manner are provided inside the casing 21. The axial magnetic bearing 23 is provided between the two sets of the radial magnetic bearings 24, 24. It is to be noted that the axial direction corresponds to the Z axis direction in the XYZ coordinate system, while the radial direction corresponds to the X axis direction and the Y axis direction in the XYZ coordinate system.

The axial magnetic bearing 23 includes two axial electromagnets 23a, 23a which are fixed to an inner peripheral surface of the casing 21, and an axial displacement sensor 23b which is fixed to an inner bottom surface of the casing 21 so as to be opposed to an inner end portion (a left end side in Fig. 1) of the main shaft 22.

The two axial electromagnets 23a, 23a are arranged so as to be opposed to each other interposing the rib member 22a. Determined gaps (axial gaps) Gax are formed respectively between side surfaces of the axial electromagnets 23a, 23a opposed to the rib member 22a, and two annular surfaces of the rib member 22a at opposite sides thereof in the axial direction of the main shaft 22. Therefore, by detecting displacement in the axial direction by the axial displacement sensor 23b, and by controlling supply of electric current to the two axial electromagnets 23a, 23a on the basis of the result of this detection, attraction forces of the axial electromagnets 23a, 23a are adjusted. In this manner, the main shaft 22 floats in the axial direction, and stably supported in a non-contact manner at a determined neutral position in the axial direction.

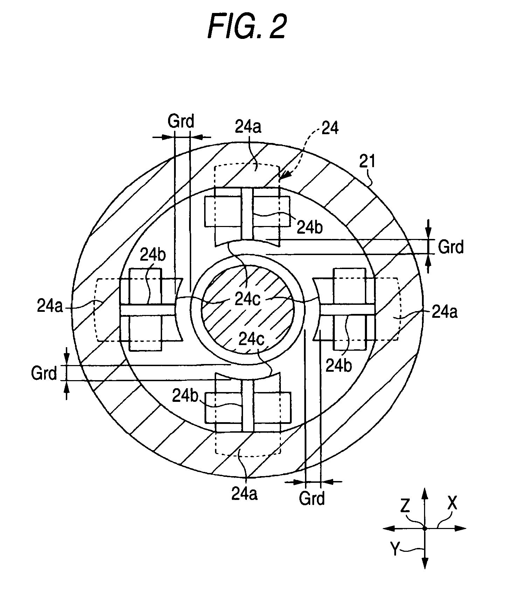

As shown in Fig. 2, a set of the radial magnetic bearing 24 includes four radial electromagnets 24a which are fixed to the inner peripheral surface of the casing 21, and four radial displacement sensors 24b which are arranged correspondingly to the radial electromagnets 24. Arc-shaped surfaces 24c corresponding to curvature of the outer peripheral surface of the main shaft 22 are respectively formed on distal end surfaces of the four radial electromagnets 24a, and determined gaps (radial gaps) Grd are formed between the arc-shaped surfaces 24c and the outer peripheral surface of the main shaft 22.

The four radial electromagnets 24a are provided at every 90 degree in a rotation direction of the main shaft 22. Therefore, when displacements in the two radial directions (the X axis direction and Y axis direction in the XYZ coordinate system) are detected by the four radial displacement sensors 24b, and supply of the electric current to the four radial electromagnets 24a is controlled on the basis of the results of the detection, attraction forces of the radial electromagnets 24a are adjusted. In this manner, the main shaft 22 floats in the radial direction, and stably supported in a non-contact manner at a determined neutral position in the radial direction.

Further, as shown in Fig. 1, a motor 25, as a drive source for rotating the main shaft 22, is incorporated in the casing 21 between the axial electromagnet 23a provided at a deep side in the casing 21 and the radial electromagnet 24a provided at the deep side similarly. The motor 25 has a known structure including a stator which is fixed to the inner peripheral surface of the casing 21 and wound with a coil, and a magnet rotor (not shown) which is provided on the outer peripheral surface of the main shaft 22 at a position corresponding to the stator.

### <Electrical structure>

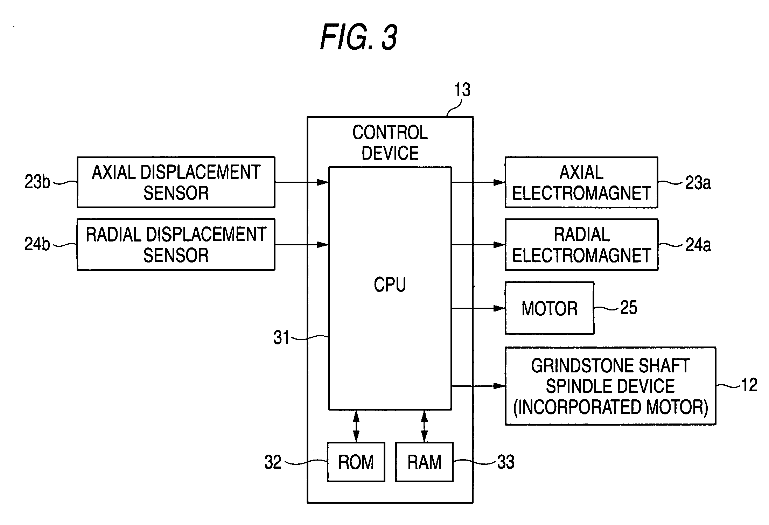

Then, electrical structure of the grinding apparatus 10 will be described.
As shown in Fig. 3, the control device 13 of the grinding apparatus 10 includes a CPU (central processing unit) 31, a ROM (read-only memory) 32, and a RAM (random-access memory) 33. These CPU 31, ROM 32, and RAM 33 are connected together through bus-bars which are not shown. The ROM 32 stores various control programs for extensively controlling respective sections of the grinding apparatus 10. In the control programs, a working control program for controlling the magnetic bearing spindle device 11 and the grindstone shaft spindle device 12 for the purpose of conducting a determined work on the work W is contained.. The RAM 33 is a data storing region, that is, a working region in which the control programs stored in the ROM 32 are developed so that the CPU 31 can perform various processes. The CPU 31 extensively controls the magnetic bearing spindle device 11 and the grindstone shaft spindle 12 on the basis of the working control programs which are stored in the ROM 32.

The two axial electromagnets 23a which are components of the one axial magnetic bearing 23 and the eight radial electromagnets 24a which are components of the two sets of the radial magnetic bearings 24 are connected to the CPU 31. Moreover, the single axial displacement sensor 23b which is a component of the one axial magnetic bearing 23 and the eight radial displacement sensors 24b which are components of the two sets of the radial magnetic bearings 24 are connected to the CPU31. Further, the motor 25 of the magnetic bearing spindle device 11 and the grindstone shaft spindle device 12 (correctly, an incorporated motor which is not shown) are connected to the CPU 31. It is to be noted that only one of the axial electromagnets 23a, the axial displacement sensor 23b, one of the radial electromagnets 24a, and one of the radial displacement sensors 24b are respectively shown in Fig. 3, for convenience's sake.

The axial displacement sensor 23b detects displacement of the main shaft 22 in the axial direction, and outputs a detected signal to the CPU 31, as information of displacement of the main shaft 22 in the axial direction. The radial displacement sensors 24b detect displacement of the main shaft 22 in the radial direction, and output detected signals to the CPU 31, as information of displacement of the main shaft 22 in the radial direction. These axial displacement sensor 23b and radial displacement sensors 24b constitute the displacement detecting means in the claims of the invention.

The CPU 31 controls supply of the electric current to the axial electromagnets 23a and the radial electromagnets 24a on the basis of the information of displacement of the main shaft 22 which has been obtained through the axial displacement sensor 23b and the radial displacement sensors 24b, thereby to control the attraction forces of the axial electromagnets 23a and the radial electromagnets 24a. As the results, the main shaft 22 is floated up and supported stably in a non-contact manner at the determined neutral position (the optimum floating position, as shown in Fig. 1) in the radial direction and in the axial direction.

Moreover, The CPU 31 controls amount of the electric current to be supplied to the axial electromagnets 23a and the radial electromagnets 24a according to the working controlling program, on the basis of the information of displacement of the main shaft 22 which has been obtained through the axial displacement sensor 23b and the radial displacement sensors 24b, for the purpose of controlling the position of the main shaft 22 in the axial direction and in the radial direction As the results, the main shaft 22 is supported stably in a non-contact manner at the determined working position which is displaced from the aforesaid neutral position in the radial direction and in the axial direction by determined distances (the determined distance < the gap Gax, Grd).

Specifically describing, the CPU 31 changes the floating position (an target position) of the main shaft 22 in the axial direction according to the working controlling program, for the purpose of reciprocating the main shaft 22 in the axial direction, and controls the amount of the electric current to be supplied to the two axial electromagnets 23a, targeting on the floating position which has been changed.

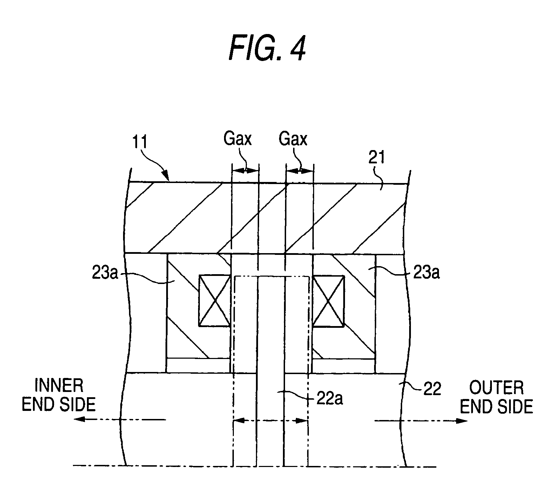

Specifically, as shown in Fig. 4, in case where the main shaft 22 is displaced in a direction of projecting from the casing 21 (to the right in Fig. 4), the CPU31 changes the floating position (the target position) of the main shaft 22 in the axial direction, as a first step. Then, the CPU 31 increases the amount of the electric current to be supplied to the axial electromagnet 23a at the outer end side of the main shaft 22 for the purpose of displacing the main shaft 22, targeting on the floating position which has been changed. As the results, the attraction force of the axial electromagnet 23a at the outer end side of the main shaft 22 becomes larger than the attraction force of the axial electromagnet 23a at the inner end side of the main shaft 22, and the main shaft 22 is displaced in the direction of projecting from the casing 21. When the CPU 31 detects that the main shaft 22 has arrived at the target position which has been changed, as described above, through the axial displacement sensor 23b, the CPU 31 controls the amount of the electric current to be supplied to the two axial electromagnets 23a so that the main shaft 22 may be maintained at the target position. The CPU 31 adjusts the attraction forces of the two axial electromagnets 23a so that the main shaft 22 may be displaced in the direction of projecting from the casing 21 by a determined distance within a range of the gap (the axial gap) Gax in the axial direction.

In case where the main shaft 22 is displaced in a direction of sinking into the casing 21 (to the left in Fig. 4), the CPU 31 changes, as a first step, the floating position (the target position) of the main shaft 22 in the axial direction in the same manner as described above. Then, the CPU 31 increases the amount of the electric current to be supplied to the axial electromagnet 23a at the inner end side of the main shaft 22 for the purpose of displacing the main shaft 22, targeting on the floating position which has been changed. As the results, the attraction force of the axial electromagnet 23a at the inner end side of the main shaft 22 becomes larger than the attraction force of the axial electromagnet 23a at the outer end side of the main shaft 22, and the main shaft 22 is displaced in the direction of sinking into the casing 21. When the CPU 31 detects that the main shaft 22 has arrived at the target position which has been changed, as described above, through the axial displacement sensor 23b, the CPU 31 controls the amount of the electric current to be supplied to the two axial electromagnets 23a so that the main shaft 22 may be maintained at the target position. The CPU 31 adjusts the attraction forces of the two axial electromagnets 23a so that the main shaft 22 may be displaced in the direction of sinking into the casing 21 by a determined distance within a range of the gap (the axial gap) Gax in the axial direction.

These displacements of the main shaft 22 in the direction of projecting and in the direction of sinking with respect to the casing 21 are repeated, whereby the main shaft 22 reciprocates in the axial direction.
Moreover, the CPU 31 changes the floating position (the target position) of the main shaft 22 in the radial direction according to the working controlling program, for the purpose of displacing the main shaft 22 in the two radial directions which are perpendicular to each other (the lateral direction and the vertical direction in Fig. 2), and controls the amount of the electric current to be supplied to the radial electromagnets 24a, targeting on the floating position which has been changed.

Specifically, in case where the main shaft 22 is displaced in the lateral direction in Fig. 2 with respect to the casing 21 (in the X axis direction in the XYZ coordinate system), the CPU 31 controls the amount of the electric current to be supplied to the two radial electromagnets 24a which are opposed to each other in the lateral direction, interposing the main shaft 22.

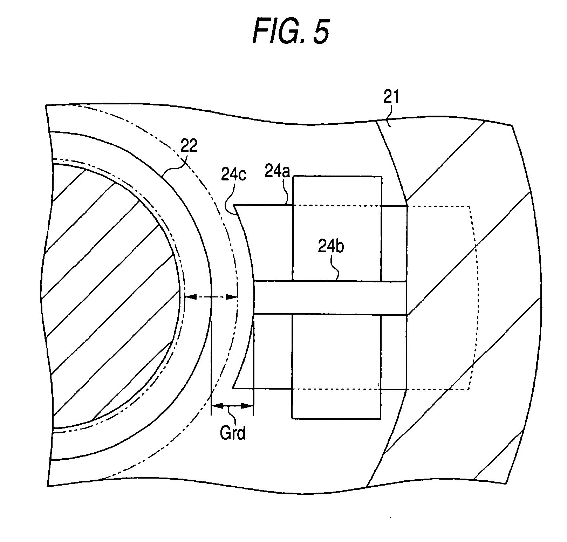

More specifically, in case where the main shaft 22 is displaced to the right in Fig. 2, the CPU 31 changes, as a first step, the floating position (the target position) of the main shaft 22 in the lateral direction in Fig. 2, in the same manner as described above. Then, the CPU 31 increases the amount of the electric current to be supplied to the radial electromagnet 24a at the right side for the purpose of displacing the main shaft 22, targeting on the floating position which has been changed. As the results, the attraction force of the radial electromagnet 24a at the right side in Fig. 2 becomes larger than the attraction force of the radial electromagnet 24a at the left side, and the main shaft 22 is displaced to the right in Fig. 2. When the CPU 31 detects that the main shaft 22 has arrived at the target position which has been changed, as described above, through the radial displacement sensors 24b, the CPU 31 controls the amount of the electric current to be supplied to the radial electromagnets 24a so that the main shaft 22 may be maintained at the target position. As also shown in Fig. 5, the CPU 31 adjusts the attraction forces of the two radial electromagnets 24a which are opposed to each other in the lateral direction so that the main shaft 22 may be displaced to the right in Fig. 2 by a determined distance within a range of the gap (the radial gap) Grd in the radial direction.

In case where the main shaft 22 is displaced to the left in Fig. 2, the CPU 31 changes, as a first step, the floating position (the target position) of the main shaft 22 in the lateral direction in Fig. 2, in the same manner as described above. Then, the CPU 31 increases the amount of the electric current to be supplied to the radial electromagnet 24a at the left side for the purpose of displacing the main shaft 22, targeting on the floating position which has been changed. As the results, the attraction force of the radial electromagnet 24a at the left side in Fig. 2 becomes larger than the attraction force of the radial electromagnet 24a at the right side, and the main shaft 22 is displaced to the left in Fig. 2. When the CPU 31 detects that the main shaft 22 has arrived at the target position which has been changed, as described above, through the radial displacement sensors 24b, the CPU 31 controls the amount of the electric current to be supplied to the radial electromagnets 24a so that the main shaft 22 may be maintained at the target position. As also shown in Fig. 5, the CPU 31 adjusts the attraction forces of the two radial electromagnets 24a which are opposed to each other in the lateral direction so that the main shaft 22 may be displaced to the left in Fig. 2 by a determined distance within a range of the gap (the radial gap) Grd in the radial direction.

Moreover, in case where the main shaft 22 is displaced in the vertical direction in Fig. 2 with respect to the casing 21 (in the Y axis direction in the XYZ coordinate system), the CPU 31 controls the amount of the electric current to be supplied to the two radial electromagnets 24a which are opposed to each other in the vertical direction, interposing the main shaft 22.

More specifically, in case where the main shaft 22 is displaced upward in Fig. 2, the CPU 31 changes, as a first step, the floating position (the target position) of the main shaft 22 in the vertical direction in Fig. 2, in the same manner as described above. Then, the CPU 31 increases the amount of the electric current to be supplied to the radial electromagnet 24a at an upper side for the purpose of displacing the main shaft 22, targeting on the floating position which has been changed. As the results, the attraction force of the radial electromagnet 24a at the upper side in Fig. 2 becomes larger than the attraction force of the radial electromagnet 24a at the lower side, and the main shaft 22 is displaced upward in Fig. 2. When the CPU 31 detects that the main shaft 22 has arrived at the target position which has been changed, as described above, through the radial displacement sensors 24b, the CPU 31 controls the amount of the electric current to be supplied to the radial electromagnets 24a so that the main shaft 22 may be maintained at the target position. Further, the CPU 31 adjusts the attraction forces of the two radial electromagnets 24a which are opposed to each other in the vertical direction so that the main shaft 22 may be displaced upward in Fig. 2 by a determined distance within a range of the gap (the radial gap) Grd in the radial direction.

In case where the main shaft 22 is displaced downward in Fig. 2, the CPU 31 changes, as a first step, the floating position (the target position) of the main shaft 22 in the vertical direction in Fig. 2, in the same manner as described above. Then, the CPU 31 increases the amount of the electric current to be supplied to the radial electromagnet 24a at a lower side for the purpose of displacing the main shaft 22, targeting on the floating position which has been changed. As the results, the attraction force of the radial electromagnet 24a at the lower side in Fig. 2 becomes larger than the attraction force of the radial electromagnet 24a at the upper side, and the main shaft 22 is displaced downward in Fig. 2. When the CPU 31 detects that the main shaft 22 has arrived at the target position which has been changed, as described above, through the radial displacement sensor 24b, the CPU 31 controls the amount of the electric current to be supplied to the radial electromagnets 24a so that the main shaft 22 may be maintained at the target position. Further, the CPU 31 adjusts the attraction forces of the two radial electromagnets 24a which are opposed to each other in the vertical direction so that the main shaft 22 may be displaced downward in Fig. 2 by a determined distance within a range of the gap (the radial gap) Grd in the radial direction.

The CPU 31 also controls the motor 25 which is incorporated in the magnetic bearing spindle device 11 and the grindstone shaft spindle device 12 (correctly, the incorporated motor which is not shown) to be driven, according to the working controlling program.

### <Operation of the grinding apparatus>

Then, operation of the grinding apparatus 10 having the above described structure will be described. In this embodiment, grinding work is conducted on the two parts at the upper and lower positions on the surface of the work W in a cylindrical shape at an opposite side to a back surface thereof which is attached to the main shaft 22 (a side surface at the right side in Fig. 1). The CPU 31 of the control device 13 controls the magnetic bearing spindle device 11 and the grindstone shaft spindle device 12, according to the working controlling program which is stored in the ROM 32.

On occasion of conducting the grinding work on the work W, as a first step, the work W is attached to the outer end portion of the main shaft 22 of the magnetic bearing spindle device 11, and the grindstone S as a tool is attached to the grindstone shaft spindle device 12. On this occasion, the main shaft 22 is maintained at the neutral position as shown in Fig. 1, and the axis of the main shaft 22 is positioned higher than an axis of the grindstone shaft spindle device 12 (the grindstone s) .

In this state, the CPU 31 drives the grindstone shaft spindle device 12 (correctly, the incorporated motor) thereby to rotate the grindstone S. Then, the CPU 31 changes the floating position of the main shaft 22 in the axial direction, for the purpose of displacing the main shaft 22 in the direction of projecting from the casing 21 (to the right in Fig. 1), and controls the amount of the electric current to be supplied to the two axial electromagnets 23a. When balance between the attraction forces of the two axial electromagnets 23a is lost, the main shaft 22 is displaced in the direction of projecting from the casing 21 in the axial direction, and the lower part of the surface of the work W which is attached to the distal end of the main shaft 22 is pressed against the grindstone S, whereby the lower part of the work W will be ground.

Then, the CPU 31 changes again the floating position of the main shaft 22 in the axial direction for the purpose of displacing the main shaft 22 in the direction of sinking into the casing 21 (to the left in Fig. 1), and controls the amount of the electric current to be supplied to the two axial electromagnets 23a. When the balance between the attraction forces of the two axial electromagnets 23a is lost, the main shaft 22 is displaced in the direction of sinking into the casing 21 in the axial direction, and the surface of the work W which is attached to the distal end of the main shaft 22 is separated from the grindstone S.

Then, the CPU 31 rotates the main shaft 22 by only 180 degree, by controlling the motor 25 to be driven. Thereafter, the CPU 31 displaces the main shaft 22 again in the direction of projecting from the casing 21, by controlling the two axial electromagnets 23a in the same manner as described above. As the results, the part of the surface of the work W which is displaced by 180 degree in the circumferential direction from the part which has been previously ground is pressed against the grindstone S, whereby the upper part of the work W will be ground.

Thereafter, the CPU 31 conducts positioning controls of the main shaft 22, in the same manner as described above. Specifically, displacements of the main shaft 22 in the direction of projecting from the casing 21 and in the direction of sinking into the casing 21 are repeated, whereby the main shaft 22 is reciprocated in the axial direction, and rotated by 180 degree at every time of reciprocation. Further, at a time of the grinding work as described above, for the purpose of correcting positional deviation of the main shaft 22 in the radial direction, it is also possible for the CPU 31 to conduct positioning control of the main shaft 22 in the radial direction, by controlling the electric current to be supplied to the two sets of the radial electromagnets 24a.

### <Effects of the Embodiment>

Consequently, according to the embodiment, the following effects can be obtained.
(1) The control device 13 displaces the main shaft 22 in the axial direction and in the radial direction within the range of the gap Gax between the rib member 22a of the main shaft 22 and the axial magnetic bearing 23, and within the range of the gap Grd between the main shaft 22 and the radial magnetic bearings 24, by controlling the attraction forces of the axial electromagnets 23a and the radial electromagnets 24a, whereby the main shaft 22 can be positioned.

According to this structure, by controlling the axial magnetic bearing 23 and the radial magnetic bearings 24, it becomes possible to displace only the main shaft 22 in the axial direction and in the radial direction, that is, to freely displace the main shaft 22 in the X axis direction, the Y axis direction, and the Z axis direction in the XYZ coordinate system. Therefore, the main shaft 22 can be positioned at high speed and with high precision, whereby working of the work W with high precision can be realized. Moreover, because high speed movement of the main shaft 22 can be achieved, in-other words, the work W can be positioned with respect to the grindstone S at high speed, working time of the work W can be decreased. Further, because the main shaft 22 itself is freely displaced, there is no necessity of providing the feeding mechanism with high precision and at high cost, in which the ball screwmechanism and linear motor etc. are employed, for the purpose of displacing the magnetic bearing spindle device 11. Accordingly, reduction of the production cost for the grinding apparatus 1 can be achieved.

(2) Moreover, the control device 13 can favorably perform positioning control of the main shaft 22, by controlling the attraction forces of the axial electromagnets 23a and the radial electromagnets 24a, on the basis of the information of displacement of the main shaft 22 which has been favorably obtained through the axial displacement sensor 23b and the radial displacement sensors 24b.

(3) Further, the control device 13 performs positioning control of the main shaft 22 according to working timing of the work W based on the determined working controlling program. In this manner, the work W can be favorably worked, because the main shaft 22 is favorably controlled to be positioned, according to the determined working controlling program.

### <Other Embodiments>

Moreover, the above described embodiment can be modified as follows.
Although the control device 13 includes the CPU 31 in this embodiment, it is also possible to employ a DSP (digital signal processor) which is specialized in processing digital signals, in place of the CPU 31.

Although ranges of the displacements of the main shaft 22 in the axial direction and in the radial direction can be optionally set within the ranges of the gaps (the axial gap and the radial gap) Gax, Grd, it is also possible to set the displacements within ranges of each half of the gaps Gax, Grd. Specifically, the attraction force of the radial electromagnet 24a is controlled within the range of a half of the gap Grd between the outer peripheral surface of the main shaft 22 and the radial electromagnet 24a, and the attraction force of the axial electromagnet 23a is controlled within the range of a half of the gap Gax between the rib member 22a and the axial electromagnet 23a.

Conventionally, there has been a magnetic bearing spindle device which is so constructed that a warning is issued, when the gap Gax between the main shaft 22 (correctly, the rib member 22a) and the axial magnetic bearing 23, and the gap Grd between the main shaft 22 and the radial magnetic bearing 24 become less than a half of the ordinary state, that is, the state where the main shaft 22 is maintained at the neutral position. The magnetic bearing spindle device 11 in this embodiment can be particularly advantageously applied to such device. This is because the aforesaid warning will not be issued, since the main shaft 22 is displaced within the range of each half of the gaps Gax, Grd which are usually secured with respect to the axial magnetic bearing 23 and the radial magnetic bearings 24. Moreover, it is possible to favorably restrain contact between the main shaft..22 (correctly, the rib member 22a)- and the axial magnetic bearing 23, and contact between the main shaft 22 and the radial magnetic bearings 24.

Although not particularly described in this embodiment, the grindstone shaft spindle device 12 maybe fixed to the chassis 10a or may be provided so as to be displaced with respect to the chassis 10a. Moreover, in these cases, it is possible to support the grindstone shaft, which is a component of the grindstone shaft spindle device 12, in a non-contact manner, by the one axial magnetic bearing 23 and two sets of the radial magnetic bearings 24, and at the same time, it is possible to control the position of the grindstone shaft, and accordingly, the grindstone S attached to the shaft, by controlling the attraction forces of these magnetic bearings.

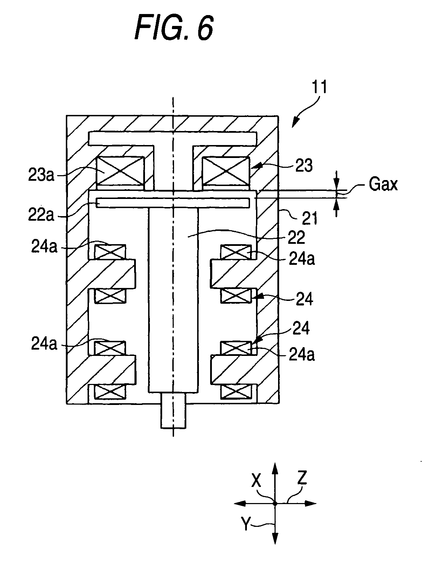

Although in this embodiment, the magnetic bearing spindle device 11 is provided on the chassis 10a in such a manner that the axis of the main shaft 22 may be along the Z axis in the XYZ coordinate system, it is also possible to provide the magnetic bearing spindle device 11 in such a manner that the axis of the main shaft 22 may be along the Y axis which is perpendicular to the Z axis. In this case, as shown in Fig. 6, it is also possible to provide the rib member 22a at the inner end of the main shaft 22, and to provide a single axial electromagnet 23a inside the casing 21 so as to be opposed to the rib member 22a interposing a determined gap (the axial gap) Gax. By controlling the single axial electromagnet 23a, load of the main shaft 22 in the axial direction (the vertical direction in Fig. 6) is borne. It is to be noted that the motor 25 is omitted in Fig. 6.

Although the work W is attached to the magnetic bearing spindle device 11, and the grindstone S is attached to the grindstone shaft spindle device 12 in this embodiment, it is also possible to attach a tool such as the grindstone S to the magnetic bearing spindle device 11, and to attach the work W to the grindstone shaft spindle device 12.

Although in this embodiment, the grinding apparatus 10 is exemplified as the machine tool on which the magnetic bearing spindle device 11 is mounted, it is also possible to apply the magnetic bearing spindle device 11 to a cutting apparatus and a machining center, and so on.

### <Other technical concepts>

Now, technical concepts which can be grasped from the above described embodiments and other examples will be additionally described below.

In a magnetic bearing spindle device for a machine tool according to the present invention, the displacement detector includes a radial displacement sensor for detecting the position of the main shaft in the radial direction, and an axial displacement sensor for detecting the position of the main shaft in the axial direction. According to this structure, it is possible to detect the displacement of the main shaft through the radial displacement sensor and the axial displacement sensor.

A machine tool is provided with the magnetic bearing spindle device according to the present invention. According to this structure, the same effects as the invention described above can be obtained.

## Claims

1. A magnetic bearing spindle device for a machine tool comprising:
a main shaft to be rotated by a motor;
a rotating member provided on an outer peripheral surface of the main shaft;
a radial magnetic bearing including a plurality of radial electromagnets which are arranged so as to be opposed to the outer peripheral surface of the main shaft with predetermined radial gaps therebetween, the radial magnetic bearing magnetically floating the main shaft in a radial direction with attraction forces of the radial electromagnets to support the main shaft in a non-contact manner;
an axial magnetic bearing including at least one axial electromagnet which is arranged so as to be opposed to the rotating member in an axial direction with a predetermined axial gap therebetween, the axial magnetic bearing magnetically floating the main shaft in the axial direction with an attraction force- of the axial electromagnet to support the main shaft in a non-contact manner;
a displacement detector that detects a position of the main shaft in the radial direction and in the axial direction and outputs a result of the detection as information of displacement of the main shaft; and
a control device that controls the attraction forces of the radial electromagnets and the axial electromagnet to maintain the main shaft at an optimum floating position and at a displaced position in which the main shaft is displaced in the radial direction within a range of the radial gap and/or in the axial direction within a range of the axial gap on the basis of the information of displacement of the main shaft obtained by the displacement detector.

2. The magnetic bearing spindle device according to claim 1, wherein the control device controls the attraction forces of the radial electromagnets to displace the main shaft in a range of a half of the radial gap, and controls the attraction force of the axial electromagnet thereby to displace the main shaft in a range of a half of the axial gap.

3. The magnetic bearing spindle device according to claim 1, wherein the control device performs positioning control of the main shaft according to a determined working controlling program.
